# EUROPÄISCHE PATENTANMELDUNG

(11) **EP 4 756 488 A1**
(43) Veröffentlichungstag der Anmeldung: **10.06.2026**
(21) Anmeldenummer: 25186276.9
(22) Anmeldetag: 30.06.2025
(51) Int. Cl.: G01S 7/481, G01S 7/497, G01S 17/10

(54) **VERFAHREN ZUR FUNKTIONSDIAGNOSE EINES LIDAR-SENSORS, UND LIDAR-SENSOREN**

(30) Priorität: 05.12.2024 EP 24217677
(71) Anmelder: Universität Kassel (Körperschaft d. öffentlichen Rechts), 34125 Kassel (DE)
(72) Erfinder: BÖRCSÖK, Josef, 68753 Waghäusel (DE); HILLMER, Hartmut, 34128 Kassel (DE); TELAWI, Samer, 34125 Kassel (DE); MICHEL, Jakob, 34134 Kassel (DE)
(74) Vertreter: Walther Bayer Faber Patentanwälte PartGmbB

(57) **Zusammenfassung**

Gegenstand der Erfindung ist ein Verfahren zur Funktionsdiagnose eines Lidar-Sensors (100, 200, 300), wobei der Lidar-Sensor (100, 200, 300) wenigstens ein Sendeelement (1, 11) zur Aussendung von Laserlicht (L) in eine Betriebsumgebung des Lidar-Sensors (100, 200, 300), wenigstens ein Empfangselement (2, 12) zur Detektion von Laserlicht (L) und/oder wenigstens eine Diagnoseeinheit (5) zur Detektion von Laserlicht (L) aufweist, wobei das Sendeelement (1, 11) zur Funktionsdiagnose ein Prüfsignal aussendet, und wobei ein anschließend von dem Empfangselement (2, 12) und/oder der Diagnoseeinheit (5) detektiertes Messsignal mit einem Sollsignal verglichen wird, wobei für die Funktionsdiagnose solche Anteile im Messsignal verwendet werden, die durch Laserlichtanteile (Lᵢ) des Prüfsignals hervorgerufen werden, die innerhalb des Lidar-Sensors (100, 200, 300) auf das Empfangselement (2, 12) und/oder die Diagnoseeinheit (5) reflektiert werden, ohne zuvor in die Betriebsumgebung ausgesendet zu werden.

## Beschreibung

Die Erfindung betrifft ein Verfahren zur Funktionsdiagnose eines Lidar-Sensors sowie zur Verfahrensdurchführung ausgebildete Lidar-Sensoren.

### STAND DER TECHNIK

Lidar-Sensoren (Light Detection and Ranging) dienen der elektro-optischen Fernerkundung, insbesondere um die Entfernung und Relativgeschwindigkeit zu Objekten der Betriebsumgebung zu bestimmen. Lidar-Sensoren basieren auf der Emission von Laserlicht in die Betriebsumgebung und dessen Detektion nach Reflektion, wobei insbesondere mittels Bestimmung der Laufzeit oder der Phasenlage des detektierten Laserlichts der Abstand zum reflektierenden Objekt ermittelt werden kann. Lidar-Sensoren finden in vielen Bereichen Anwendung, z. B. in der autonomen Fahrzeugtechnik, Robotik und Geomapping.

Lidar-Sensoren unterliegen verschiedenen Fehler- und Rauschquellen, beispielsweise Temperaturschwankungen, mechanischen Vibrationen, Fehlausrichtungen und Bauteilverschleiß. Diese Faktoren können die Genauigkeit und Konsistenz der Lidar-Messungen beeinträchtigen, sodass eine regelmäßige Funktionsdiagnose und ggfs. notwendige Justierung vorzunehmen sind. Bei der Funktionsdiagnose, auch als Kalibrierung bezeichnet, wird der Istwert einer zu untersuchenden Größe oder einer davon abgeleiteten Größe, beispielsweise die Intensität eines detektierten Laserlichtsignals oder die Signallaufzeit, mit einem Referenzwert verglichen. Bei einer überkritischen Abweichung zwischen Ist- und Referenzwert ist eine entsprechende Justierung zur Korrektur notwendig.

Im Stand der Technik werden üblicherweise externe, d.h., in der Betriebsumgebung der Lidar-Sensoren angeordnete Kalibrierungsziele zur Funktionsdiagnose verwendet, für Lidar-Sensoren von Kraftfahrzeugen beispielsweise dedizierte Kalibrierwände oder -tafeln mit S/W-Mustern. Für derartige Kalibriervorgänge sind nachteiligerweise separate Kalibriersitzungen vonnöten, d.h., dass eine solche Funktionsdiagnose nicht parallel zum regulären Betrieb der Lidar-Sensoren durchgeführt werden kann.

Diesbezüglich offenbart die Druckschrift DE 10 2020 103 794 A1 ein Verfahren zur Betriebskalibrierung eines Lidar-Sensors eines Fahrzeugs oder eines Roboters. Dabei wird während eines Betriebs des Fahrzeugs oder Roboters mittels zumindest einer Kamera erfasst, ob im Erfassungsbereich des Lidar-Sensors zumindest ein Objekt vorhanden ist, dessen Reflektivität der eines Referenzobjekts einer zuvor vorgenommenen Referenzkalibrierung entspricht. Bei Vorhandensein eines solchen Objekts wird mittels des Lidar-Sensors eine Entfernung zu dem Objekt ermittelt. Weiterhin wird eine Intensität eines aufgrund einer von dem Objekt reflektierten Laserstrahlung erzeugten Sensorsignals ermittelt, wobei die ermittelte Intensität mit einer zugehörigen Referenzintensität verglichen wird und in Abhängigkeit des Vergleichs der Intensität mit der Referenzintensität die Empfindlichkeit des Lidarempfängers justiert wird.

### OFFENBARUNG DER ERFINDUNG

Es ist die Aufgabe der vorliegenden Erfindung, ein Verfahren zur Funktionsdiagnose eines Lidar-Sensors vorzuschlagen, welches insbesondere parallel zum regulären Betrieb des Lidar-Sensors durchführbar ist.

Diese Aufgabe wird gelöst von einem Verfahren gemäß Anspruch 1 sowie zur Verfahrensdurchführung ausgebildeten Lidar-Sensoren gemäß den Ansprüchen 5, 7und 9. Vorteilhafte Weiterbildungen der Erfindung sind in den abhängigen Ansprüchen angegeben.

Die Erfindung offenbart ein Verfahren zur Funktionsdiagnose eines Lidar-Sensors, wobei der Lidar-Sensor wenigstens ein Sendeelement zur Aussendung von Laserlicht in eine Betriebsumgebung des Lidar-Sensors, wenigstens ein Empfangselement zur Detektion von Laserlicht und/oder wenigstens eine Diagnoseeinheit zur Detektion von Laserlicht aufweist, wobei das Sendeelement zur Funktionsdiagnose ein Prüfsignal aussendet, und wobei ein anschließend von dem Empfangselement und/oder der Diagnoseeinheit detektiertes Messsignal mit einem Sollsignal verglichen wird, wobei für die Funktionsdiagnose solche Anteile im Messsignal verwendet werden, die durch Laserlichtanteile des Prüfsignals hervorgerufen werden, die innerhalb des Lidar-Sensors auf das Empfangselement und/oder die Diagnoseeinheit reflektiert werden, ohne zuvor in die Betriebsumgebung ausgesendet zu werden.

Der Grundgedanke der Erfindung besteht darin, die Funktionsdiagnose, auch als funktionstechnische Kalibrierung bezeichnet, basierend rein auf solchen Signalanteilen vorzunehmen, deren Lichtweg ausschließlich innerhalb des Lidar-Sensors verläuft, sodass die Funktionsdiagnose unabhängig von der konkreten Betriebsumgebung und ohne Zuhilfenahme von externen Hilfsmitteln, etwa einer Kalibriertafel, durchführbar ist. Mit diesem Ansatz können insbesondere die Funktionszustände der elektronischen Komponenten des Lidar-Sensors diagnostiziert werden, insbesondere des Sendeelements, des Empfangselements, der Steuereinheit, der Auswerteeinheit sowie einer ggfs. in den Lichtweg eingebundenen Scaneinheit. Der Vergleich des detektierten Messsignal mit einem Sollsignal betrifft insbesondere die Korrektheit, d.h., den Grad, mit dem die jeweilige Komponente die richtigen Ergebnisse mit der erforderlichen Genauigkeit liefert.

Das zur Funktionsdiagnose verwendete Messsignal kann von demselben Empfangselement detektiert werden, das auch für die Umgebungserfassung im regulären Betrieb des Lidar-Sensors zuständig ist. Aufgrund der wesentlich kürzeren Lichtlaufzeit des ausschließlich innerhalb des Lidar-Sensors reflektierten Laserlichts kann dessen Anteil am Messsignal auf einfache Weise von dem in der Betriebsumgebung reflektierten Laserlicht unterschieden werden. Alternativ oder in Kombination kann der Lidar-Sensor mit einer dedizierten Diagnoseeinheit ausgestattet sein, die nur zur Funktionsdiagnose vorgesehen ist und dementsprechend nur die ausschließlich innerhalb des Lidar-Sensors reflektierten Laserlichtanteile als Messsignal detektiert. Das Empfangselement und die Diagnoseeinheit sind insbesondere mit Photodioden zur Detektion des Laserlichts ausgestattet.

Die Länge des Lichtwegs der zur Funktionsdiagnose verwendeten Laserlichtanteile des Prüfsignals zwischen dem Sendeelement, dem Empfangselement und/oder der Diagnoseeinheit ist vorzugsweise bekannt und/oder unveränderlich, sodass mit dem Verfahren auch die von dem Lidar-Sensor bestimmte Lichtlaufzeit als Größe kalibrierbar ist.

Die Funktionsdiagnose wird insbesondere parallel zum regulären Betrieb des Lidar-Sensors, d.h., der Umgebungserfassung, durchgeführt, wobei die in die Betriebsumgebung ausgesendeten Laserlichtanteile des Prüfsignals zur Umgebungserfassung zur Verfügung stehen. Beispielsweise entspricht das Prüfsignal hinsichtlich der Signalform und der Signalintensität dem üblicherweise ohnehin zur Umgebungserfassung verwendeten Signal, etwa Laserlicht Einzelpulse oder Pulszüge, sodass die Funktionsdiagnose permanent und kontinuierlich im Betrieb des Lidar-Sensors vorgenommen werden kann.

In einer weiteren Ausführungsform umfasst das Verfahren eine Justierung des Lidar-Sensors, die basierend auf den Befunden der Funktionsdiagnose vorgenommen wird, wobei im Anschluss an die Justierung erneut ein Prüfsignal von dem Sendeelement ausgesendet wird, und wobei das anschließend von dem Empfangselement und/oder der Diagnoseeinheit detektierte Messsignal erneut mit dem Sollsignal verglichen wird. Je nach konkretem Befund kann die Justierung zur Korrektur von einer oder mehrerer der elektronischen Komponenten des Lidar-Sensors durchgeführt werden.

Des Weiteren betrifft die Erfindung einen Lidar-Sensor zur Durchführung des erfindungsgemäßen Verfahrens, umfassend wenigstens ein Sendeelement zur Aussendung von Laserlicht in eine Betriebsumgebung und wenigstens ein Empfangselement zur Detektion von Laserlicht, wobei der Lidar-Sensor abschnittsweise eine innenliegende teilreflektierende Beschichtung und/oder eine innenliegende teilreflektierende Oberflächenstruktur aufweist, sodass Anteile des von dem Sendeelement ausgesendeten Laserlichts daran reflektiert werden, ohne in die Betriebsumgebung ausgesendet zu werden.

Insbesondere kann die teilreflektierende Wirkung durch eine dielektrische Beschichtung erzeugt werden, die beispielsweise als ein Multilayer-Schichtverbund ausgebildet ist, wobei durch Auswahl der Schichtanzahl, der Schichtdicken und der Brechungsindices der verwendeten Dielektrika eine wohldefinierter Grad an Teilreflexion in Abhängigkeit von der verwendeten Wellenlänge des Laserlichts, typischerweise aus dem Nahen Infrarot, zweckmäßig einstellbar ist. Alternativ oder ergänzend kann die teilreflektierende Wirkung durch eine zweckmäßige Mikrostrukturierung einer optischen Oberfläche erzeugt werden. Der Reflexionsgrad sollte vorzugsweise so gering gewählt werden, dass die Intensität der reflektierten Lichtanteile für die beabsichtigte Funktionsdiagnose ausreicht, ohne dass damit eine signifikante Beschränkung der Reichweite des Lidar-Sensors einhergeht.

Beispielsweise umfasst der Lidar-Sensor eine Linse zur Umlenkung des Laserlichts des Sendeelements in die Betriebsumgebung, wobei die teilreflektierende Beschichtung auf der Innenseite der Linse angeordnet ist.

Insbesondere können Sende- und Empfangselement unmittelbar benachbart angeordnet sein, etwa auf einer gemeinsamen Leiterkarte, und der Lichtweg zur teilreflektierenden Beschichtung oder Oberflächenstruktur ist auf Hin- und Rückweg im Wesentlichen identisch.

Die Erfindung betrifft zudem einen zweiten Lidar-Sensor zur Durchführung des erfindungsgemäßen Verfahrens, umfassend wenigstens ein Sendeelement zur Aussendung von Laserlicht in eine Betriebsumgebung und wenigstens ein Empfangselement zur Detektion von Laserlicht, wobei der Lidar-Sensor eine Abschlussscheibe aufweist, deren Innenfläche derart angeordnet ist, dass das von dem Sendeelement ausgesendete Laserlicht unter einem von Null verschiedenen Einfallswinkel auf die Innenfläche einfällt, sodass Anteile des Laserlichts an der Innenfläche reflektiert werden, ohne in die Betriebsumgebung ausgesendet zu werden, wobei der Lidar-Sensor wenigstens ein Umlenkmittel, insbesondere einen Spiegel, aufweist, das zur Umlenkung des an der Innenfläche der Abschlussscheibe reflektierten Anteils des Laserlichts auf das Empfangselement ausgebildet ist. Die Innenfläche der Abschlussscheibe ist derart orientiert, dass das Laserlicht unter einem endlichen Winkel gegen den lokalen Normalenvektor der Innenfläche einfällt, und der zur Funktionsdiagnose verwendete Signalanteil entspricht dem an der Innenfläche reflektierten Anteil des Laserlichts. Die Abschlussscheibe ist transparent für die Wellenlänge des verwendeten Laserlichts und der Großteil der einfallenden Strahlungsintensität wird zwecks Umgebungserfassung durch die Abschlussscheibe transmittiert. Das Umlenkmittel ist insbesondere ausschließlich zur Umlenkung des an der Innenfläche der Abschlussscheibe reflektierten Laserlichtanteils vorgesehen und nicht in den Lichtweg zur Erfassung der Betriebsumgebung eingebunden.

Für die Erfassung der Betriebsumgebung umfasst der zweite Lidar-Sensor insbesondere eine Scaneinheit, die zur Umlenkung des von dem Sendeelement ausgesendeten Laserlichts in die Betriebsumgebung und zur Umlenkung von in der Betriebsumgebung reflektiertem Laserlicht auf das Empfangselement ausgebildet ist. Die Scaneinheit und das Umlenkmittel stellen separate Bauteile des Lidar-Sensors dar.

Die Erfindung betrifft zudem einen dritten Lidar-Sensor zur Durchführung des erfindungsgemäßen Verfahrens, umfassend wenigstens ein Sendeelement zur Aussendung von Laserlicht in eine Betriebsumgebung des Lidar-Sensors und wenigstens ein Empfangselement zur Detektion von in der Betriebsumgebung des Lidar-Sensors reflektiertem Laserlicht, wobei der Lidar-Sensor wiederum eine Abschlussscheibe aufweist, deren Innenfläche derart angeordnet ist, dass das von dem Sendeelement ausgesendete Laserlicht unter einem von Null verschiedenen Einfallswinkel auf die Innenfläche einfällt, sodass Anteile des Laserlichts an der Innenfläche reflektiert werden, ohne in die Betriebsumgebung ausgesendet zu werden, und wobei der Lidar-Sensor wenigstens eine Diagnoseeinheit zur Detektion der an der Innenfläche der Abschlussscheibe reflektierten Anteile des Laserlichts umfasst. Die Diagnoseeinheit ist ausschließlich zur Detektion von den zur Funktionsdiagnose verwendeten Laserlichtanteilen vorgesehen, d.h., die Diagnoseeinheit und das Empfangselement stellen separate Bauteile des Lidar-Sensors dar.

Vorzugsweise umfasst der dritte Lidar-Sensor wenigstens ein Umlenkmittel, insbesondere einen Spiegel, das zur Umlenkung des an der Innenfläche der Abschlussscheibe reflektierten Anteils des Laserlichts auf die Diagnoseeinheit ausgebildet ist. Für die Erfassung der Betriebsumgebung umfasst der dritte Lidar-Sensor insbesondere eine Scaneinheit, die zur Umlenkung des von dem Sendeelement ausgesendeten Laserlichts in die Betriebsumgebung und zur Umlenkung von in der Betriebsumgebung reflektiertem Laserlicht auf das Empfangselement ausgebildet ist. Die Scaneinheit und das Umlenkmittel stellen separate Bauteile des Lidar-Sensors dar, und das Umlenkmittel ist vorzugsweise ausschließlich zur Umlenkung des an der Innenfläche der Abschlussscheibe reflektierten Laserlichtanteils vorgesehen und nicht in den Lichtweg zur Erfassung der Betriebsumgebung eingebunden.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
- Fig. 1a:: einen ersten Lidar-Sensor,
- Fig. 1b:: den Lidar-Sensor gemäß Fig. 1a bei der Durchführung des Verfahrens zur Funktionsdiagnose,
- Fig. 2a-c:: eine weitere Darstellung des Verfahrens zur Funktionsdiagnose mit einem ersten Lidar-Sensor,
- Fig. 3:: einen zweiten Lidar-Sensor, und
- Fig. 4a,b:: einen dritten Lidar-Sensor.

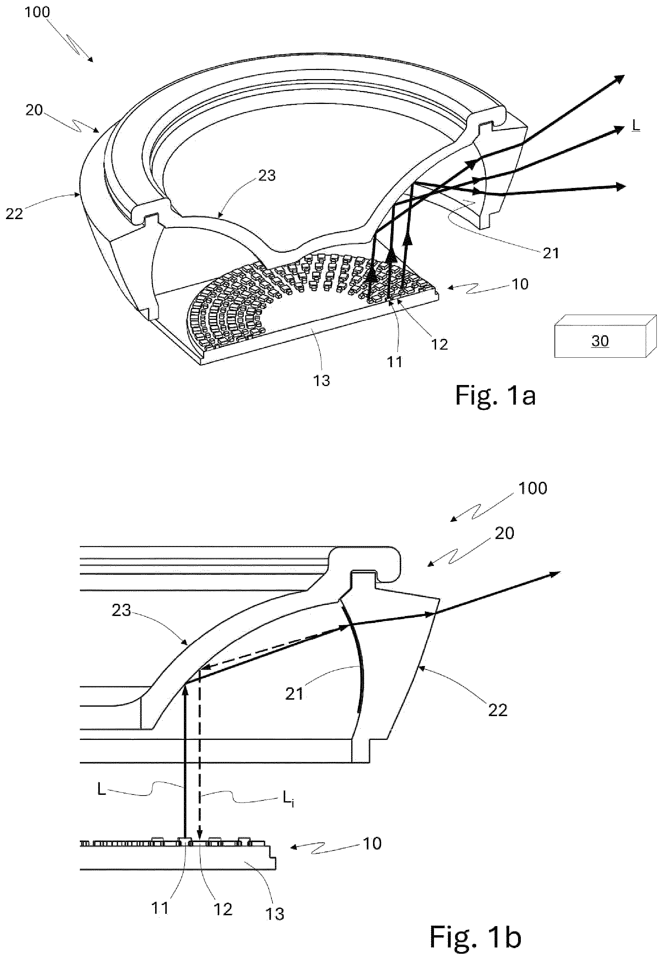

Fig. 1a zeigt in schematischer Darstellung eine perspektivische Schnittansicht eines ersten Ausführungsbeispiels eines erfindungsgemäßen Lidar-Sensors 100, und Fig. 1b zeigt eine Schnittansicht eines Teils dieses ersten Ausführungsbeispiels bei der Durchführung des erfindungsgemäßen Verfahrens zur Funktionsdiagnose.

Der Lidar-Sensor 100 umfasst die Sende-Empfangs-Einheit 10, die Optikeinheit 20 sowie die Steuer- und Auswerteeinheit 30. Die Sende-Empfangs-Einheit 10 weist eine Mehrzahl von Sendeelementen 11 und Empfangselementen 12 auf, die auf der gemeinsamen Leiterkarte 13 in einer gemeinsamen Ebene angeordnet sind, wobei die Hauptsenderichtung der Sendeelemente 11 und die Hauptempfangsrichtung der Empfangselemente 12 zueinander kollinear orientiert sind. Beispielhaft sind drei der Sendeelemente 11 aktiv und senden Laserlicht L aus. Die als Panoramaoptik mit einem Sichtfeld von 360° ausgebildete Optikeinheit 20 ist in Hauptsenderichtung zentriert vor der Sende-Empfangs-Einheit 10 angeordnet und lenkt das Laserlicht L in der dargestellten Weise in die Betriebsumgebung des Lidar-Sensors 100 um. Die Optikeinheit 20 umfasst den Reflektor 23 und die Linse 22, die jeweils als rotationssymmetrische Komponenten ausgebildet sind. Aus der Betriebsumgebung zurückreflektiertes Laserlicht wird auf entsprechendem Lichtweg von der Optikeinheit 20 auf die aktive Fläche der Sende-Empfangs-Einheit 10 gelenkt und dort von den Empfangselementen 12 detektiert.

Typischerweise sind die Sendeelemente 11 als Laserdioden und die Empfangselemente 12 als Photodioden, etwa als Vertical Avalanche Photo Diode (VAPD), ausgebildet. Den Laserdioden sind vorzugsweise kollimierende Optiken zugeordnet (hier nicht dargestellt). Die aktive Fläche der Sende-Empfangs-Einheit 10 ist kreisringförmig ausgebildet und weist Bildpunkte auf, die durch Gruppen aus Paaren von Sendeelementen 11 und Empfangselementen 12 gebildet sind. Zur Steuerung der Sendeelemente 11 und zur Auswertung der von den Empfangselementen 12 detektierten Signale dient die Steuer- und Auswerteinheit 30, die auf nicht dargestellte Weise mit der Leiterkarte 13 verbunden ist.

Auf der Innenseite der Linse 22 ist die teilreflektierende Beschichtung 21 angeordnet, an der, wie in Fig. 1b dargestellt, Anteile Lᵢ des von den Sendeelementen 11 ausgesendeten Laserlichts L reflektiert werden, ohne in die Betriebsumgebung ausgesendet zu werden. Die teilreflektierende Beschichtung 21 ist derart ausgebildet, dass die Intensität der reflektierten Anteile Lᵢ wesentlich geringer ist als die Intensität des in die Betriebsumgebung ausgesendeten Laserlichts L.

Bei der Durchführung des erfindungsgemäßen Verfahrens zur Funktionsdiagnose werden von den Sendeelementen 11 Prüfsignale ausgesendet und die anschließend von den Empfangselementen 12 detektierten Messsignale mit einem Sollsignal verglichen. Dabei werden nur solche Anteile in den Messsignalen verwendet, die durch Laserlichtanteile Lᵢ der Prüfsignale hervorgerufen werden, die an der innenliegenden, teilreflektierenden Beschichtung 21, d.h., innerhalb des Lidar-Sensors 100, auf die Empfangselemente 12 reflektiert werden, ohne zuvor in die Betriebsumgebung ausgesendet zu werden. Da die teilreflektierende Beschichtung 21 den Großteil des auftreffenden Laserlichts L transmittiert, parallel zur Funktionsdiagnose auch der reguläre Betrieb des Lidar-Sensors 100, d.h., die Erfassung der Betriebsumgebung, durchgeführt werden.

Die Sendeelemente 11 und die Empfangselemente 12 sind auf der Leiterkarte 13 aufgenommen, wobei die Leiterkarte 13 unbeweglich in den Lidar-Sensor 100 integriert ist und eine feste Lagebeziehung zu der ebenfalls unbeweglich aufgenommenen Optikeinheit 20 aufweist. Somit ist die Länge des Lichtwegs der zur Funktionsdiagnose verwendeten Laserlichtanteile Lᵢ des Prüfsignals zwischen den Sendeelementen 11 und den Empfangselement 12 bekannt und unveränderlich, wodurch eine Kalibrierung der vom Lidar-Sensor 100 ermittelten Lichtlaufzeit im Rahmen des erfindungsgemäßen Verfahrens durchführbar ist.

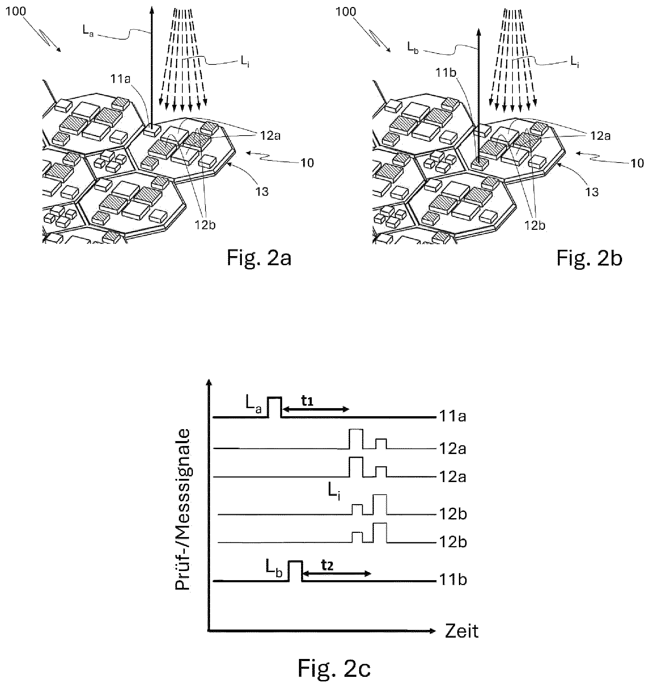

Fig. 2a-c zeigen weitere schematische Darstellungen zur Illustration des erfindungsgemäßen Verfahrens zur Funktionsdiagnose eines zweiten Ausführungsbeispiels eines erfindungsgemäßen Lidar-Sensors 100. Von dem Lidar-Sensor 100 ist nur ein Teil der Sende-Empfangs-Einheit 10 dargestellt, die übrigen Komponenten, insbesondere die zugehörige Optikeinheit (20) entspricht dem ersten Ausführungsbeispiel der Fig. 1a und Fig. 1b. In der Sende-Empfangs-Einheit 10 sind die Sendeelemente 11a, 11b und die Empfangselemente 12a, 12b in Gruppen angeordnet. Die Gesamtheit der Gruppen weist eine gitterförmige Anordnung unter Bildung der aktiven Fläche der Sende-Empfangs-Einheit 10 auf, wobei jede Gruppe einen Bildpunkt der aktiven Fläche darstellt. Jeder Bildpunkt ist somit redundant gegen Fehlfunktionen einzelner Komponenten abgesichert. Die erforderliche Redundanz kann gemäß einer der in den sicherheitsrelevanten Normen definierten Sicherheitsarchitekturen ("NooM", vgl. IEC 61508-6 Anhang B) implementiert werden. Im Detail weist jede Gruppe eine Untergruppe mit zwei Sendeelemente 11a zur Aussendung von Laserlicht einer ersten Wellenlänge, zwei Sendeelemente 11b (schraffiert) zur Aussendung von Laserlicht einer zweiten Wellenlänge, zwei Empfangselemente 12a mit einer maximalen Empfindlichkeit im Bereich der ersten Wellenlänge und zwei Empfangselemente 12b (schraffiert) mit einer maximalen Empfindlichkeit im Bereich der zweiten Wellenlänge auf. Dadurch ist ein funktionales System zur Realisierung unterschiedlicher NooM-Sicherheitsarchitekturen gebildet. Die Gruppen werden komplettiert durch zwei weitere Untergruppen, die jeweils zwei Sende- und zwei Empfangselemente umfassen. Dadurch ist ein besonders fehlertolerantes System gebildet, das durch Verwendung zweier unterschiedlicher Wellenlängen zudem auch eine besonders verlässliche Erkennung der Betriebsumgebung bei schwierigen oder wechselnden Bedingungen (Beleuchtung, Wetter, etc) ermöglicht.

Fig. 2a und Fig. 2b zeigen das aufeinander folgende Aussenden von Prüfsignalen als Laserlichtpulse Lₐ, L_{b} unterschiedlicher Wellenlängen durch einzelne Sendeelemente 11a, 11b und das anschließende Detektieren der ausschließlich innerhalb des Lidar-Sensors 100 an der teilreflektierenden Beschichtung (21) auf der Innenseite der Linse (22) reflektierten Laserlichtanteile Lᵢ mit den vier Empfangselementen 12a, 12b. Die zugehörigen Verläufe der Prüfsignale und der Messsignale über der Zeit t sind in Fig. 2c dargestellt. Die von den Empfangselementen 12a, 12b auf den beiden Wellenlängen jeweils empfangenen Signale werden erfindungsgemäß mit zugehörigen Sollsignalen (nicht dargestellt) verglichen, woraus die Funktionsfähigkeit jedes Bildpunkts detailliert diagnostiziert werden kann.

Dabei können mittels der zugehörigen Steuer- und Auswerteeinheit aus den Messsignalen zweckmäßige Größen für den Vergleich gebildet werden, im Beispiel der Fig. 2c etwa für jedes Empfangselement 12a, 12b das Amplitudenverhältnis der Echos Lᵢ auf den beiden unterschiedlichen Wellenlängen. Weicht das Amplitudenverhältnis beispielsweise auf sämtlichen Empfangselementen 12a, 12b signifikant von einem Sollwert ab, so kann das einen Hinweis auf eine Fehlfunktion eines der Sendeelemente 11a, 11b geben. Liegt eine Abweichung hingegen nur bei einem der Empfangselemente 12a, 12b vor, so ist dort von einer Fehlfunktion auszugehen. Weitere Vergleichsgrößen können beispielsweise mittels der detektierten Laufzeitdifferenzen gebildet werden. Prinzipiell ist das dargestellte Ausführungsbeispiel zur Durchführung diverser Diagnoseschritte geeignet, und es können damit Sicherheitsarchitekturen etwa vom Typ 1oo2D oder ähnlich realisiert werden. Damit lassen sich hohe Safety Integrity Level (SIL) erreichen, beispielsweise für Anwendungen in Kraftfahrzeugen (ASIL), und ein entsprechender Lidar-Sensor wäre selbst für Luft- und Raumfahrt geeignet.

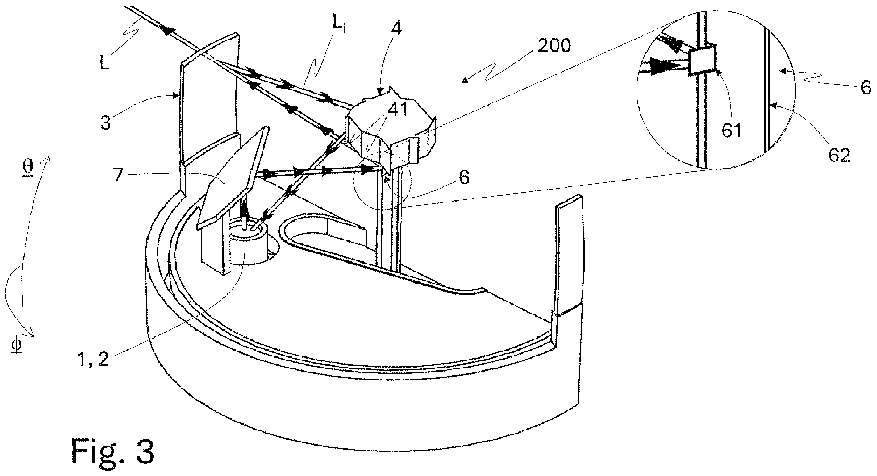

Fig. 3 zeigt in schematischer Darstellung eine perspektivische Ansicht und ein vergrößertes Detail eines Ausführungsbeispiels eines zweiten erfindungsgemäßen Lidar-Sensors 200 bei der Durchführung des erfindungsgemäßen Verfahrens zur Funktionsdiagnose. Der Lidar-Sensor 200 umfasst die Scaneinheit 6 zur Umlenkung des Laserlichts L in die Betriebsumgebung, sowie zur Umlenkung von in der Betriebsumgebung reflektiertem Laserlicht in Richtung des Empfangselements 2, wozu die Scaneinheit 6 das Spiegelelement 61 auf dem Grundkörper 62 aufweist (siehe vergrößertes Detail). Das Sendeelement 1 zur Aussendung des Laserlichts L und das Empfangselement 2 zur Detektion sind in eine Sende-Empfangseinheit integriert. Weiterhin ist der über der Sende-Empfangseinheit angeordnete starre Reflektor 7 in den Lichtweg des Laserlichts L eingebunden, der das von dem Sendeelement 1 ausgesendete Laserlicht L auf das Spiegelelement 61 umlenkt, sowie das von dem Spiegelelement 61 kommende Laserlicht auf das Empfangselement 2 umlenkt. Der Reflektor 7 ist derart orientiert, dass der Lichtweg zwischen dem Reflektor 7 und dem Spiegelelement 61 gegen die Horizontale geneigt ist, sodass der weitere Lichtweg zwischen dem Spiegelelement 61 und der Betriebsumgebung unter einem solchen Vertikalwinkel θ verläuft, dass der Reflektor 7 unterhalb des scanbaren Raumwinkelsegments liegt und nicht zu einer Abschattung führt. Die Abdeckscheibe 3 (nur abschnittsweise dargestellt) ist transparent für das verwendete Laserlicht L, dessen Wellenlänge typischerweise im Nahen Infrarot liegt.

Das Spiegelelement 61 umfasst einen spiegelnden, schwenkbaren Blattabschnitt mit zwei planparallelen Oberflächen, der zur Umlenkung des Laserlichts L dient. Der Blattabschnitt ist in Fig. 3 in einer vollständig ausgelenkten Grundstellung dargestellt, in welcher der Blattabschnitt hier beispielhaft etwa im rechten Winkel vom Grundkörper 62 abragt. Der Blattabschnitt ist mittels elektrostatischer Kraft in eine Endstellung schwenkbar, in welcher der Blattabschnitt im Wesentlichen planparallel zum Grundkörper 62 orientiert ist. Aus Gründen der Übersichtlichkeit sind die Mittel zur elektrostatischen Aktuierung in der Fig. 3 nicht dargestellt. Weitere Details zum Aufbau und zur Funktion der Scaneinheit 6 sind in der nachveröffentlichten europäischen Patentanmeldung mit der Anmeldenummer EP 25 161 799.9 offenbart, auf deren Inhalt hier vollumfänglich verwiesen wird. Beim Schwenken des Blattabschnitts in Richtung seiner Endstellung variiert der Azimutwinkel ϕ unter dem das Laserlicht L in die Betriebsumgebung ausgesendet wird, wobei der Vertikalwinkel θ unverändert bleibt. Das gesamte azimutale Scanwinkelintervall der Scaneinheit 6 beträgt im vorliegenden Ausführungsbeispiel etwa 180° und das abgetastete Raumwinkelsegment bildet einen dementsprechenden Abschnitt einer Kugelzone.

Erfindungsgemäß ist die Innenfläche der Abschlussscheibe 3 derart angeordnet, dass das von dem Sendeelement 1 ausgesendete Laserlicht **L,** nach der Umlenkung durch den Reflektor 7 und das Spiegelelement 61, unter einem von Null verschiedenen Einfallswinkel auf die Innenfläche einfällt, sodass Anteile Lᵢ des Laserlichts L an der Innenfläche reflektiert werden, ohne in die Betriebsumgebung ausgesendet zu werden. Der Lidar-Sensor 200 weist das Umlenkmittel 4 in Gestalt eines segmentierten Spiegels mit unterschiedlich orientierten Spiegelsegmenten 41 auf, das zur Umlenkung des an der Innenfläche der Abschlussscheibe 3 reflektierten Anteils Lᵢ des Laserlichts L auf das Empfangselement 2 ausgebildet ist. Beim Verschwenken des Blattabschnitts des Spiegelelements 61 überstreicht das in die Betriebsumgebung ausgesendete Laserlicht L ein entsprechendes Winkelintervall in Richtung des Azimutwinkels ϕ, sodass der an der Innenfläche der Abschlussscheibe 3 reflektierte Anteil Lᵢ über wechselnde Spiegelelemente 41 auf das Empfangselement 2 weitergeleitet wird. Das Verfahren zur Funktionsdiagnose kann somit kontinuierlich und parallel zur Umgebungserfassung durchgeführt werden. Das Empfangselement 2 wird dabei über zwei unterschiedliche Lichtwege beaufschlagt: über das Spiegelelement 61 und den Reflektor 7 wird das in der Betriebsumgebung reflektierte Laserlicht auf das Empfangselement 2 geleitet (dieser Lichtweg entspricht im Wesentlichen dem in der Fig. 3 dargestellten Lichtweg des ausgehend vom Sendeelement 1 in die Betriebsumgebung ausgesendeten Laserlichts L), und über die Spiegelsegmente 41 werden die zur Funktionsdiagnose verwendeten Signalanteile Lᵢ eingestrahlt.

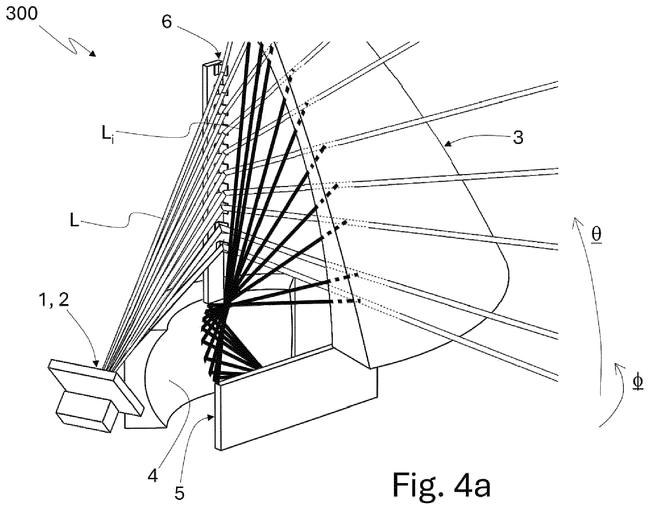

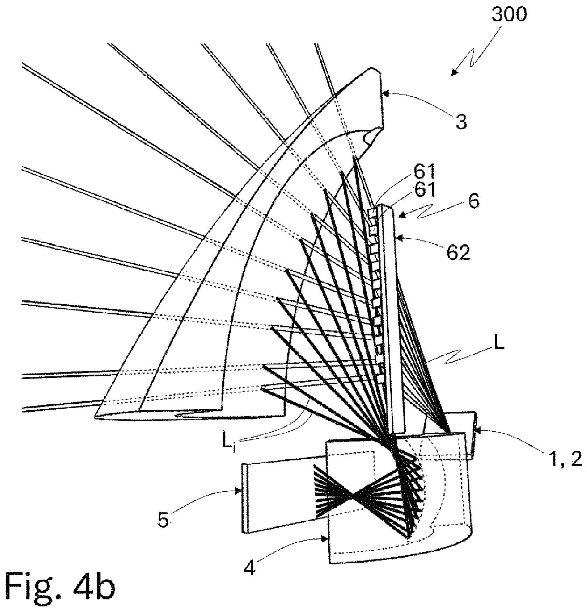

Fig. 4a und Fig. 4b zeigen in schematischer Darstellung perspektivische Ansichten eines Ausführungsbeispiels eines dritten erfindungsgemäßen Lidar-Sensors 300 bei der Durchführung des erfindungsgemäßen Verfahrens zur Funktionsdiagnose. Wie das Ausführungsbeispiel der Fig. 3 umfasst der Lidar-Sensor 300 eine spiegelbasierte Scaneinheit 6, die hier jedoch eine Mehrzahl von Spiegelelementen 61 aufweist, die zum Scannen von jeweils unterschiedlichen Raumwinkelsegmenten angeordnet sind, nämlich zur Umlenkung des Laserlichts L unter jeweils unterschiedlichen Vertikalwinkeln θ. Für weitere Details wird abermals auch auf die nachveröffentlichte europäische Patentanmeldung mit der Anmeldenummer EP 25 161 799.9 verwiesen.

Der Lidar-Sensor 300 umfasst eine der Anzahl an Spiegelelementen 61 entsprechende Anzahl von Sendeelementen 1 und von Empfangselementen 2, wobei die Sendeelemente 1 und die Empfangselemente 2 in eine Sende-Empfangseinheit integriert sind. Die Empfangselemente 2 sind zur Umgebungserfassung vorgesehen, d.h., zur Detektion von Laserlicht L, das in der Betriebsumgebung des Lidar-Sensors 300 reflektiert worden ist. Jedem Spiegelelement 61 ist ein Paar aus einem Sendeelement 1 und einem Empfangselement 2 zugeordnet, und der Lichtweg des Laserlichts L zwischen dem Sendeelement 1 und dem zugehörigen Empfangselement 2 verläuft auf Hin- und Rückweg über das jeweils zugeordnete Spiegelelement 61. Die Sende-Empfangseinheit ist relativ zur Scaneinheit 6 derart angeordnet, dass das von den Sendeelementen 1 emittierte Laserlicht L unter jeweils unterschiedlichen Vertikalwinkeln θ auf die Spiegelelemente 61 einfällt. Die Spiegelelemente 61 sind spaltenförmig übereinander angeordnet, derart, dass die Schwenkachsen, um die die Blattabschnitte jeweils schwenkbar sind, kollinear zueinander orientiert sind. Beim vollständigen Schwenken der Blattabschnitte überstreichen die in die Betriebsumgebung umgelenkten Strahlen des Laserlichts L jeweils ein Scanwinkelintervall von 180° in Richtung des Azimutwinkels ϕ unter konstanten, jedoch voneinander verschiedenen Vertikalwinkeln θ. Das gesamte Sensorbildfeld des Lidar-Sensors 300 entspricht einem Raumwinkelsegment von knapp π sr, d.h., von knapp einem Viertel einer Kugeloberfläche.

Unterhalb der Scaneinheit 6 und der (nur teilweise dargestellten) Abschlussscheibe 3 ist die Diagnoseeinheit 5 angeordnet, die ausschließlich zur Detektion von den zur Funktionsdiagnose verwendeten Laserlichtanteilen Lᵢ vorgesehen ist. Diese Laserlichtanteile Lᵢ bilden die Messsignale, die im Zuge der Funktionsdiagnose mit zugehörigen Sollsignalen verglichen werden. Das von den Spiegelelementen 61 umgelenkte Laserlicht L fällt unter einem von Null verschiedenen Einfallswinkel auf die Innenfläche der Abschlussscheibe 3 ein, und die an der Innenfläche dementsprechend reflektierten Anteile Lᵢ treffen in weiterer Folge auf das Umlenkmittel 4, das als ein Spiegel mit toroidal gekrümmter Oberfläche ausgebildet ist. Das Umlenkmittel 4 reflektiert die Laserlichtanteile Lᵢ schließlich auf die Diagnoseeinheit 5. Die aktive Fläche der Diagnoseeinheit 5 ist insbesondere durch eine Vielzahl von Photodioden in matrixförmiger Anordnung gebildet. Jede (hier horizontal orientierte) Zeile dieser Photodioden-Matrix ist einem Sendeelement 1 bzw. einem Spiegelelement 61 zugeordnet und wird beim Schwenken der Spiegelelemente 61 durch den jeweiligen Laserlichtanteil Lᵢ überstrichen. Die Funktionsdiagnose des Lidar-Sensors 300 kann somit kontinuierlich und parallel zur Umgebungserfassung durchgeführt werden.

### Bezugszeichenliste:

- 100: Lidar-Sensor
- 10: Sende-Empfangs-Einheit
- 11, 11a, 11b: Sendeelement
- 12, 12a, 12b: Empfangselement
- 13: Leiterkarte
- 20: Optikeinheit
- 21: teilreflektierende Beschichtung
- 22: Linse
- 23: Reflektor
- 30: Steuer- und Auswerteeinheit

- 200, 300: Lidar-Sensor
- 1: Sendeelement
- 2: Empfangselement
- 3: Abschlussscheibe
- 4: Umlenkmittel
- 41: Spiegelsegment
- 5: Diagnoseeinheit
- 6: Scaneinheit
- 61: Spiegelelement
- 62: Grundkörper
- 7: Reflektor

- L, Lₐ, L_{b}, Lᵢ: Laserlicht
- θ: Vertikalwinkel
- ϕ: Azimutwinkel

## Patentansprüche

1. Verfahren zur Funktionsdiagnose eines Lidar-Sensors (100, 200, 300), wobei der Lidar-Sensor (100, 200, 300) wenigstens ein Sendeelement (1, 11) zur Aussendung von Laserlicht (L) in eine Betriebsumgebung des Lidar-Sensors (100, 200, 300), wenigstens ein Empfangselement (2, 12) zur Detektion von Laserlicht (L) und/oder wenigstens eine Diagnoseeinheit (5) zur Detektion von Laserlicht (L) aufweist, wobei das Sendeelement (1, 11) zur Funktionsdiagnose ein Prüfsignal aussendet, und wobei ein anschließend von dem Empfangselement (2, 12) und/oder der Diagnoseeinheit (5) detektiertes Messsignal mit einem Sollsignal verglichen wird, wobei für die Funktionsdiagnose solche Anteile im Messsignal verwendet werden, die durch Laserlichtanteile (Lᵢ) des Prüfsignals hervorgerufen werden, die innerhalb des Lidar-Sensors (100, 200, 300) auf das Empfangselement (2, 12) und/oder die Diagnoseeinheit (5) reflektiert werden, ohne zuvor in die Betriebsumgebung ausgesendet zu werden.

2. Verfahren nach Anspruch 1,
**dadurch gekennzeichnet,**
**dass** die Funktionsdiagnose parallel zum regulären Betrieb des Lidar-Sensors (100, 200, 300) durchgeführt wird.

3. Verfahren nach Anspruch 1 oder 2,
**dadurch gekennzeichnet,**
**dass** die Länge des Lichtwegs der zur Funktionsdiagnose verwendeten Laserlichtanteile (Lᵢ) des Prüfsignals zwischen dem Sendeelement (1, 11) und dem Empfangselement (2, 12) und/oder der Diagnoseeinheit (5) bekannt und/oder unveränderlich ist.

4. Verfahren nach einem der vorgenannten Ansprüche,
**dadurch gekennzeichnet,**
**dass** basierend auf den Befunden der Funktionsdiagnose eine Justierung des Lidar-Sensors (100, 200, 300) vorgenommen wird, wobei daraufhin erneut ein Prüfsignal von dem Sendeelement (1, 11) ausgesendet wird, und wobei das anschließend von dem Empfangselement (2, 12) und/oder der Diagnoseeinheit (5) detektierte Messsignal erneut mit dem Sollsignal verglichen wird.

5. Lidar-Sensor (100) zur Durchführung des Verfahrens nach einem der vorgenannten Ansprüche, umfassend wenigstens ein Sendeelement (11) zur Aussendung von Laserlicht (L) in eine Betriebsumgebung des Lidar-Sensors (100) und wenigstens ein Empfangselement (12) zur Detektion von Laserlicht (L), wobei der Lidar-Sensor (100) abschnittsweise eine innenliegende teilreflektierende Beschichtung (21) und/oder eine innenliegende teilreflektierende Oberflächenstruktur aufweist, sodass Anteile (Lᵢ) des von dem Sendeelement (11) ausgesendeten Laserlichts (L) daran reflektiert werden, ohne in die Betriebsumgebung ausgesendet zu werden.

6. Lidar-Sensor (100) nach Anspruch 5,
**dadurch gekennzeichnet,**
**dass** der Lidar-Sensor (100) eine Linse (22) zur Umlenkung des Laserlichts (L) des Sendeelements (11) in die Betriebsumgebung des Lidar-Sensors (100) umfasst, wobei die teilreflektierende Beschichtung (21) auf der Innenseite der Linse (22) angeordnet ist.

7. Lidar-Sensor (200) zur Durchführung des Verfahrens nach einem der Ansprüche 1 bis 4, umfassend wenigstens ein Sendeelement (1) zur Aussendung von Laserlicht (L) in eine Betriebsumgebung des Lidar-Sensors (200) und wenigstens ein Empfangselement (2) zur Detektion von Laserlicht (L), wobei der Lidar-Sensor (200) eine Abschlussscheibe (3) aufweist, deren Innenfläche derart angeordnet ist, dass das von dem Sendeelement (1) ausgesendete Laserlicht (L) unter einem von Null verschiedenen Einfallswinkel auf die Innenfläche einfällt, sodass Anteile (Lᵢ) des Laserlichts (L) an der Innenfläche reflektiert werden, ohne in die Betriebsumgebung ausgesendet zu werden, wobei der Lidar-Sensor (200) wenigstens ein Umlenkmittel (4), insbesondere einen Spiegel, aufweist, das zur Umlenkung des an der Innenfläche der Abschlussscheibe (3) reflektierten Anteils (Lᵢ) des Laserlichts (L) auf das Empfangselement (2) ausgebildet ist.

8. Lidar-Sensor (200) nach Anspruch 7,
**dadurch gekennzeichnet,**
**dass** der Lidar-Sensor (200) eine Scaneinheit (6) umfasst, die zur Umlenkung des von dem Sendeelement (1) ausgesendeten Laserlichts (L) in die Betriebsumgebung und zur Umlenkung von in der Betriebsumgebung reflektiertem Laserlicht auf das Empfangselement (2) ausgebildet ist.

9. Lidar-Sensor (300) zur Durchführung des Verfahrens nach einem der Ansprüche 1 bis 4, umfassend wenigstens ein Sendeelement (1) zur Aussendung von Laserlicht (L) in eine Betriebsumgebung des Lidar-Sensors (300) und wenigstens ein Empfangselement (2) zur Detektion von in der Betriebsumgebung des Lidar-Sensors (300) reflektiertem Laserlicht (L), wobei der Lidar-Sensor (300) eine Abschlussscheibe (3) aufweist, deren Innenfläche derart angeordnet ist, dass das von dem Sendeelement (1) ausgesendete Laserlicht (L) unter einem von Null verschiedenen Einfallswinkel auf die Innenfläche einfällt, sodass Anteile (Lᵢ) des Laserlichts (L) an der Innenfläche reflektiert werden, ohne in die Betriebsumgebung ausgesendet zu werden, und wobei der Lidar-Sensor (300) wenigstens eine Diagnoseeinheit (5) zur Detektion der an der Innenfläche der Abschlussscheibe (3) reflektierten Anteile (Lᵢ) des Laserlichts (L) umfasst.

10. Lidar-Sensor (300) nach Anspruch 9,
**dadurch gekennzeichnet,**
**dass** der Lidar-Sensor (300) wenigstens ein Umlenkmittel (4), insbesondere einen Spiegel, aufweist, das zur Umlenkung des an der Innenfläche der Abschlussscheibe (3) reflektierten Anteils (Lᵢ) des Laserlichts (L) auf die Diagnoseeinheit (5) ausgebildet ist.

11. Lidar-Sensor (300) nach Anspruch 9 oder 10,
**dadurch gekennzeichnet,**
**dass** der Lidar-Sensor (300) eine Scaneinheit (6) umfasst, die zur Umlenkung des von dem Sendeelement (1) ausgesendeten Laserlichts (L) in die Betriebsumgebung und zur Umlenkung von in der Betriebsumgebung reflektiertem Laserlicht auf das Empfangselement (2) ausgebildet ist.
